# EUROPEAN PATENT SPECIFICATION

(11) **EP 2 829 116 B1**
(45) Date of publication and mention of the grant of the patent: **09.01.2019**
(21) Application number: 13715839.0
(22) Date of filing: 22.03.2013
(51) Int. Cl.: H04W 40/02, H04W 40/28

(54) **DYNAMIIC DIVISION OF ROUTING DOMAINS IN REACTIVE ROUTING NETWORKS**
DYNAMISCHE AUFTEILUNG VON ROUTING-DOMÄNEN IN NETZWERKEN MIT REAKTIVEM ROUTING
DIVISION DYNAMIQUE DE DOMAINES DE ROUTAGE DANS DES RÉSEAUX DE ROUTAGE RÉACTIF

(30) Priority: 23.03.2012 US 201261614703 P; 06.09.2012 US 201213605528
(43) Date of publication of application: 28.01.2015
(73) Proprietor: Cisco Technology, Inc., San Jose, CA 95134 (US)
(72) Inventor: VASSEUR, Jean-Philippe, F-38410 Saint Martin D'uriage (FR); HUI, Jonathan, W., Belmont, CA 94002 (US)
(74) Representative: Kazi, Ilya
(86) International application number: PCT/US2013/033478
(87) International publication number: WO 2013/142780

(56) References cited:
- US-B1- 7 177 295
- ZYGMUNT J HAAS ET AL: "The Zone Routing Protocol (ZRP) for Ad Hoc Networks; draft-ietf-manet-zone-zrp-03.txt", 20000301, vol. manet, no. 3, 1 March 2000 (2000-03-01), XP015022666, ISSN: 0000-0004
- JOHN SUCEC ET AL: "A Query Scope Agent for Flood Search Routing Protocols", WIRELESS NETWORKS ; THE JOURNAL OF MOBILE COMMUNICATION, COMPUTATION AND INFORMATION, KLUWER ACADEMIC PUBLISHERS, DO, vol. 9, no. 6, 1 November 2003 (2003-11-01), pages 623-636, XP019216823, ISSN: 1572-8196, DOI: 10.1023/A:1025908518800
- YOSHIKAGE OCHI ET AL: "An Extended AODV Routing for Reduction of Control Messages in Ad hoc Networks", CONSUMER COMMUNICATIONS AND NETWORKING CONFERENCE, 2007. CCNC 2007. 20 07 4TH IEEE, IEEE, PI, 1 January 2007 (2007-01-01), pages 74-78, XP031087753, ISBN: 978-1-4244-0667-8
- DONG-WON KUM ET AL: "An efficient on-demand routing approach with directional flooding for wireless mesh networks", JOURNAL OF COMMUNICATIONS AND NETWORKS, KOREAN INSTITUTE OF COMMUNICATION SCIENCES, SEOUL, KR, vol. 12, no. 1, 1 February 2010 (2010-02-01), pages 67-73, XP011483455, ISSN: 1229-2370, DOI: 10.1109/JCN.2010.6388435

## Description

### RELATED APPLICATION

The present application claims priority to U.S. Provisional Patent Application No. 61/614,703, filed March 23, 2012, and U.S. Patent Application No.: 13/605,528 filed September 6, 2012.

### TECHNICAL FIELD

The present disclosure relates generally to communication networks, and, more particularly, to reactive routing in communication networks.

### BACKGROUND

Low power and Lossy Networks (LLNs), e.g., sensor networks, have a myriad of applications, such as Smart Grid (smart metering), home and building automation, smart cities, etc. Various challenges are presented with LLNs, such as lossy links, low bandwidth, battery operation, low memory and/or processing capability, etc. Routing in LLNs is undoubtedly one of the most critical challenges and a core component of the overall networking solution. Two fundamentally and radically different approaches, each with certain advantages and drawbacks, have been envisioned for routing in LLN/ad-hoc networks known as:
1) Proactive routing: routing topologies are pre-computed by the control plane (e.g., IS-IS, OSPF, RIP, and RPL are proactive routing protocols); and
2) Reactive routing: routes are computed on-the-fly and on-demand by a node that sends one or more discovery probes throughout the network (e.g., AODV, DYMO, and LOAD are reactive routing protocols).

A hybrid routing protocol for mobile ad-hoc networks is disclosed in Zygmunt et al., "The Zone Routing Protocol (ZRP) for Ad Hoc Networks", <draft-ietf-manet-zone-zrp-03.txt>. In the disclosed protocol, each node proactively determines routes within a local region referred to as the routing zone. If a destination is not within a node's routing zone, the node bordercasts a route query to its peripheral nodes. US 7177295 similarly discloses a routing approach in which a proactive routing protocol is applied within a node's routing zone.

Applications of the Expanding Ring Search (ERS) routing approach are discussed in Sucec et al., "A Query Scope Agent for Flood Search Routing Protocols", Journal of Mobile Communication, Computation and Information, Kluwer Academic Publishers, vol. 9 no. 6 pp.623-636 (2003); and in Ochi et al., "An Extended AODV Routing for Reduction of Control Messages in Ad hoc Networks", Consumer Communications and Networking Conference (2007).

Aspects of the invention are set out in the independent claims. Certain preferred features are set out in the dependent claims.

### BRIEF DESCRIPTION OF THE DRAWINGS

The embodiments herein may be better understood by referring to the following description in conjunction with the accompanying drawings in which like reference numerals indicate identically or functionally similar elements, of which:
FIG. 1 illustrates an example communication network;
FIG. 2 illustrates an example network device/node;
FIGS. 3A-3J illustrate examples of dynamic division of a reactive routing network into sub-domains as described herein;
FIG. 4 illustrates an example simplified procedure for dynamic division of a reactive routing network into sub-domains, particularly from the perspective of a transit node; and
FIG. 5 illustrates another example simplified procedure for dynamic division of a reactive routing network into sub-domains, particularly from the perspective of a requesting node.

### DESCRIPTION OF EXAMPLE EMBODIMENTS

### Overview

According to one or more embodiments of the disclosure, a reactive routing network may be dynamically divided into reactive routing network sub-domains that comprise a plurality of nodes having bounded route request (RREQ) scopes (e.g., search-domains) that are limited to a particular path length. A transit node may receive a RREQ from an originating node within the first reactive routing network sub-domain for a target node determined by the originating node to be beyond the bounded RREQ scope of the originating node. The transit node may then discover a route from the transit node to the target node, and return the route to the originating node. In this manner, the transit node may establish a complete route between the originating node and the target node.

According to one or more additional embodiments of the disclosure, a node within a reactive routing network may receive a segmentation message from a capable node (e.g., a transit node, a LBR, etc.), and in response, establish a bounded route request (RREQ) scope for any RREQ originated by the node which is limited to a particular path length. As such, the node may forward RREQs to a transit node for any target node not identified by the node as being within the bounded RREQ scope of the node.

### Description

A computer network is a geographically distributed collection of nodes interconnected by communication links and segments for transporting data between end nodes, such as personal computers and workstations, or other devices, such as sensors, etc. Many types of networks are available, ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC) such as IEEE 61334, IEEE P1901.2, and others. In addition, a Mobile Ad-Hoc Network (MANET) is a kind of wireless ad-hoc network, which is generally considered a self-configuring network of mobile routes (and associated hosts) connected by wireless links, the union of which forms an arbitrary topology.

Smart object networks, such as sensor networks, in particular, are a specific type of network having spatially distributed autonomous devices such as sensors, actuators, etc., that cooperatively monitor physical or environmental conditions at different locations, such as, e.g., energy/power consumption, resource consumption (e.g., water/gas/etc. for advanced metering infrastructure or "AMI" applications) temperature, pressure, vibration, sound, radiation, motion, pollutants, etc. Other types of smart objects include actuators, which may be, e.g., responsible for turning on/off an engine or perform any other actions. Sensor networks, a type of smart object network, are typically shared-media networks, such as wireless or PLC networks. That is, in addition to one or more sensors, each sensor device (node) in a sensor network may generally be equipped with a radio transceiver or other communication port such as PLC, a microcontroller, and an energy source, such as a battery. Often, smart object networks are considered field area networks (FANs), neighborhood area networks (NANs), etc. Generally, size and cost constraints on smart object nodes (e.g., sensors) result in corresponding constraints on resources such as energy, memory, computational speed and bandwidth. Correspondingly, a reactive routing protocol may, though need not, be used in place of a proactive routing protocol for smart object networks.

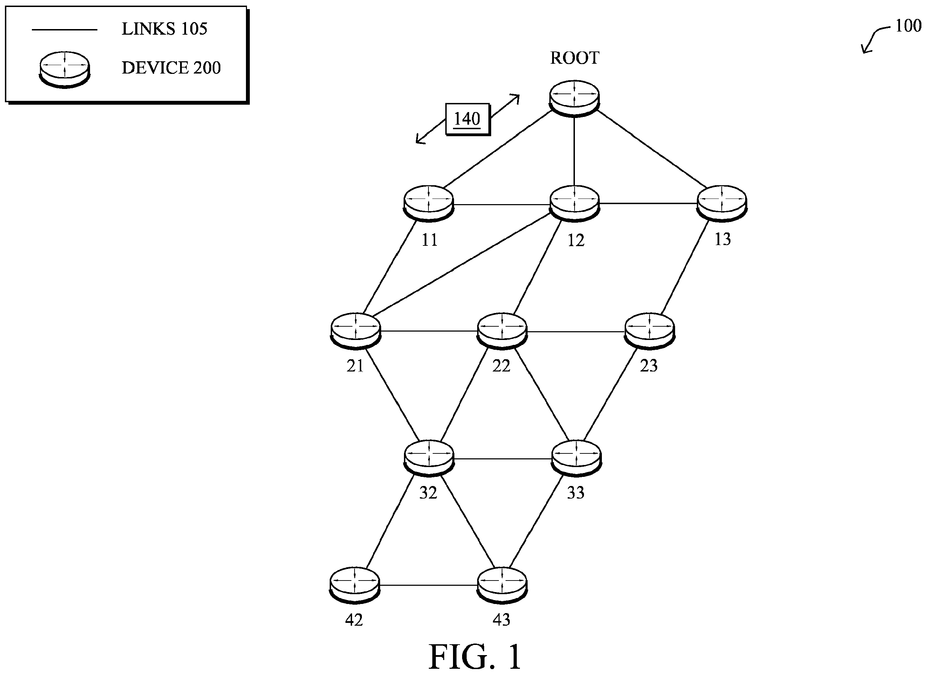

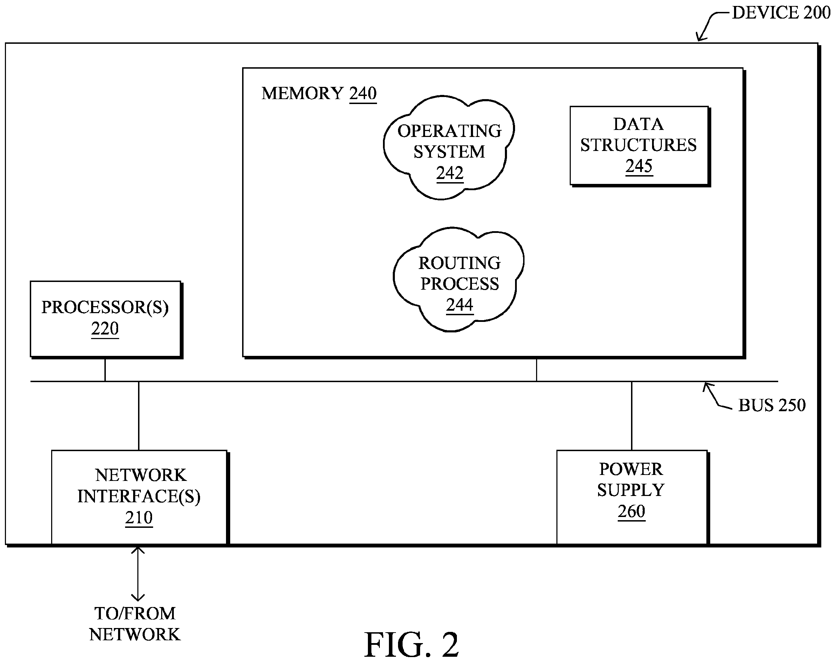

FIG. 1 is a schematic block diagram of an example computer network 100 illustratively comprising nodes/devices 200 (e.g., labeled as shown, "root," "11," "12," ... "43," and described in FIG. 2 below) interconnected by various methods of communication. For instance, the links 105 may be wired links or shared media (e.g., wireless links, PLC links, etc.) where certain nodes 200, such as, e.g., routers, sensors, computers, etc., may be in communication with other nodes 200, e.g., based on distance, signal strength, current operational status, location, etc. Those skilled in the art will understand that any number of nodes, devices, links, etc. may be used in the computer network, and that the view shown herein is for simplicity. Also, those skilled in the art will further understand that while the network is shown in a certain orientation, particularly with a "root" node, the network 100 is merely an example illustration that is not meant to limit the disclosure.

Data packets 140 (e.g., traffic and/or messages sent between the devices/nodes) may be exchanged among the nodes/devices of the computer network 100 using predefined network communication protocols such as certain known wired protocols, wireless protocols (e.g., IEEE Std. 802.15.4, WiFi, Bluetooth®, etc.), PLC protocols, or other shared-media protocols where appropriate. In this context, a protocol consists of a set of rules defining how the nodes interact with each other.

FIG. 2 is a schematic block diagram of an example node/device 200 that may be used with one or more embodiments described herein, e.g., as any of the nodes shown in FIG. 1 above. The device may comprise one or more network interfaces 210 (e.g., wired, wireless, PLC, etc.), at least one processor 220, and a memory 240 interconnected by a system bus 250, as well as a power supply 260 (e.g., battery, plug-in, etc.).

The network interface(s) 210 contain the mechanical, electrical, and signaling circuitry for communicating data over links 105 coupled to the network 100. The network interfaces may be configured to transmit and/or receive data using a variety of different communication protocols. Note, further, that the nodes may have two different types of network connections 210, e.g., wireless and wired/physical connections, and that the view herein is merely for illustration. Also, while the network interface 210 is shown separately from power supply 260, for PLC the network interface 210 may communicate through the power supply 260, or may be an integral component of the power supply. In some specific configurations the PLC signal may be coupled to the power line feeding into the power supply.

The memory 240 comprises a plurality of storage locations that are addressable by the processor 220 and the network interfaces 210 for storing software programs and data structures associated with the embodiments described herein. Note that certain devices may have limited memory or no memory (e.g., no memory for storage other than for programs/processes operating on the device and associated caches). The processor 220 may comprise hardware elements or hardware logic adapted to execute the software programs and manipulate the data structures 245. An operating system 242, portions of which are typically resident in memory 240 and executed by the processor, functionally organizes the device by, inter alia, invoking operations in support of software processes and/or services executing on the device. These software processes and/or services may comprise an illustrative routing process 244, as described herein. Note that while the routing process 244 is shown in centralized memory 240, alternative embodiments provide for the process to be specifically operated within the network interfaces 210.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while the processes have been shown separately, those skilled in the art will appreciate that processes may be routines or modules within other processes.

Routing process (services) 244 contains computer executable instructions executed by the processor 220 to perform functions provided by one or more routing protocols, such as proactive or reactive routing protocols as will be understood by those skilled in the art. These functions may, on capable devices, be configured to manage a routing/forwarding table (a data structure 245) containing, e.g., data used to make routing/forwarding decisions. In particular, in proactive routing, connectivity is discovered and known prior to computing routes to any destination in the network, e.g., link state routing such as Open Shortest Path First (OSPF), or Intermediate-System-to-Intermediate-System (ISIS), or Optimized Link State Routing (OLSR). Reactive routing, on the other hand, discovers neighbors (i.e., does not have an *a priori* knowledge of network topology), and in response to a needed route to a destination, sends a route request into the network to determine which neighboring node may be used to reach the desired destination. Example reactive routing protocols may comprise Ad-hoc On-demand Distance Vector (AODV), Dynamic Source Routing (DSR), DYnamic MANET On-demand Routing (DYMO), LLN On-demand Ad hoc Distance-vector (LOAD), etc. Notably, on devices not capable or configured to store routing entries, routing process 244 may consist solely of providing mechanisms necessary for source routing techniques. That is, for source routing, other devices in the network can tell the less capable devices exactly where to send the packets, and the less capable devices simply forward the packets as directed.

Notably, mesh networks have become increasingly popular and practical in recent years. In particular, shared-media mesh networks, such as wireless or PLC networks, etc., are often on what is referred to as Low-Power and Lossy Networks (LLNs), which are a class of networks in which both the routers and their interconnect are constrained: LLN routers typically operate with constraints, e.g., processing power, memory, and/or energy (battery), and their interconnects are characterized by, illustratively, high loss rates, low data rates, and/or instability. LLNs are comprised of anything from a few dozen and up to thousands or even millions of LLN routers, and support point-to-point traffic (between devices inside the LLN), point-to-multipoint traffic (from a central control point such at the root node to a subset of devices inside the LLN) and multipoint-to-point traffic (from devices inside the LLN towards a central control point).

An example implementation of LLNs is an "Internet of Things" network. Loosely, the term "Internet of Things" or "IoT" may be used by those in the art to refer to uniquely identifiable objects (things) and their virtual representations in a network-based architecture. In particular, the next frontier in the evolution of the Internet is the ability to connect more than just computers and communications devices, but rather the ability to connect "objects" in general, such as lights, appliances, vehicles, HVAC (heating, ventilating, and air-conditioning), windows and window shades and blinds, doors, locks, etc. The "Internet of Things" thus generally refers to the interconnection of objects (e.g., smart objects), such as sensors and actuators, over a computer network (e.g., IP), which may be the Public Internet or a private network. Such devices have been used in the industry for decades, usually in the form of non-IP or proprietary protocols that are connected to IP networks by way of protocol translation gateways. With the emergence of a myriad of applications, such as the smart grid, smart cities, and building and industrial automation, and cars (e.g., that can interconnect millions of objects for sensing things like power quality, tire pressure, and temperature and that can actuate engines and lights), it has been of the utmost importance to extend the IP protocol suite for these networks.

As noted above, routing in LLNs is undoubtedly one of the most critical challenges and a core component of the overall networking solution. Two fundamentally and radically different approaches have been envisioned for routing in LLN/ad-hoc networks known as proactive routing (routing topologies are pre-computed by the control plane) and reactive routing (routes are computed on-the-fly and on-demand by a node that sends a discovery probes throughout the network).

An example proactive routing protocol specified in an Internet Engineering Task Force (IETF) Proposed Standard, Request for Comment (RFC) 6550, entitled "RPL: IPv6 Routing Protocol for Low Power and Lossy Networks" by Winter, et al. (March 2012), provides a mechanism that supports multipoint-to-point (MP2P) traffic from devices inside the LLN towards a central control point (e.g., LLN Border Routers (LBRs) or "root nodes/devices" generally), as well as point-to-multipoint (P2MP) traffic from the central control point to the devices inside the LLN (and also point-to-point, or "P2P" traffic). RPL may generally be described as a distance vector routing protocol that builds a Directed Acyclic Graph (DAG) or Destination Oriented Directed Acyclic Graphs (DODAGs) for use in routing traffic/packets 140 from a root using mechanisms that support both local and global repair, in addition to defining a set of features to bound the control traffic, support repair, etc. One or more RPL instances may be built using a combination of metrics and constraints.

An example reactive routing protocol is specified in an IETF Internet Draft, entitled "LLN On-demand Ad hoc Distance-vector Routing Protocol - Next Generation (LOADng)" <draft-clausen-lln-loadng-05> by Clausen, et al. (July 14, 2012 version), which provides a reactive routing protocol for LLNs, e.g., as derived from AODV. Other reactive routing protocol efforts include the G3-PLC specification approved by the ITU, and also one described in an informative annex of IEEE P1901.2.

One stated benefit of reactive routing protocols is that their state and communication overhead scales with the number of active sources and destinations in the network. Such protocols only initiate control traffic and establish state when a route to a destination is unknown. In contrast, proactive routing protocols build and maintain routes to all destinations before data packets arrive and incur state and communication overhead that scales with the number of nodes, rather than the number of active sources and destinations. Some believe that reactive routing protocols are well-suited for certain Smart Grid Automated Meter Reading (AMR) applications where a Collection Engine reads each meter one-by-one in round-robin fashion. In such simplistic applications, only one source-destination pair is required at any point in time.

Reactive routing protocols, however, have a number of technical issues that are particularly exhibited in large-scale LLNs, such as large utility networks. It is thus important to have a robust solution for reactive routing. Therefore, various techniques are hereinafter shown and described for use with reactive routing networks to address such shortcomings.

### Dynamic Division of Reactive Routing Networks into Sub-Domains

Reactive routing protocols rely on flooding the whole network with probes/messages (e.g., RREQs) to discover routes between a source and a destination within the network. Unfortunately, such network floods generate significant volumes of network traffic. Several mitigation techniques have been developed to reduce the negative effects of flooding by reducing/limiting the number of broadcast packets generated by such floods. Illustratively, these techniques may operate by attempting to limit the flood scope, the number of duplicated messages (e.g., multicast trickle), etc. Nevertheless, such network floods are still generally required for any reactive routing protocol in order to make sure that at least N probes/messages reach the destination/target. It is important to note that while N may be small in "classic" networks that have high delivery rates, N is likely to be higher in LLNs in which the Packet Delivery Ratio (PDR) is typically low. Unfortunately, these mitigation techniques lead to a trade-off between storing network state and increasing network load due to flooded messages (e.g., a RREQ broadcast). For example, storing more network state information makes it possible to reduce the number of times that the discovery process (e.g., a network flood) must be triggered, and therefore decreases the control plane overhead; however, storing more state information requires more memory to store the routing entries for each originator, especially in cases where the routes are not limited to the best next hops, but rather include full end-to-end paths from the source to the destination, which increases cost.

The techniques herein provide dynamic division of a reactive routing network into sub-domains by allowing a routing sub-domain to be dynamically divided into search-domains based on the observed message flood rate within the network, thus significantly reducing the message flood rate in the network, as well as the associated control plane cost.

Specifically, according to one or more embodiments of the disclosure as described in detail below, a reactive routing network may be dynamically divided into reactive routing network sub-domains that each include nodes with bounded route request (RREQ) scopes (e.g., search-domains) that are limited to a particular path length. In other words, a reactive routing network sub-domain includes a plurality of nodes, each of which has a search-domain with a limited number of surrounding nodes that may receive a RREQ from that particular node. A transit node may receive a RREQ from an originating node within a first reactive routing network sub-domain for a target node determined by the originating node to be beyond the bounded RREQ scope (i.e., search-domain) of the originating node. The transit node may then discover a route from the transit node to the target node, and return the route to the originating node. The discovered route may include at least one node in a second reactive routing network sub-domain, which is outside of the first reactive routing network sub-domain. In this manner, the transit node may establish a complete route between the originating node and the target node. In addition, according to one or more additional embodiments of the disclosure, a node within a reactive routing network may receive a segmentation message from a capable node (e.g., a transit node, a LBR, etc.), and in response, establish a bounded RREQ scope (e.g., a search-domain) for any RREQ originated by the node that is limited to a particular path length. As such, the node may forward RREQs to one or more transit nodes for any target node not identified by the node as being within the search-domain of the node.

Illustratively, the techniques described herein may be performed by hardware, software, and/or firmware, such as in accordance with the routing process 244, which may contain computer executable instructions executed by the processor 220 (or independent processor of interfaces 210) to perform functions relating to the novel techniques described herein. For example, the techniques herein may be treated as extensions to conventional routing protocols, such as the various reactive routing protocols, and as such, may be processed by similar components understood in the art that execute those protocols, accordingly.

The techniques herein may dynamically divide a reactive routing network into reactive routing sub-domains based on observed message flood patterns within the network and/or based on network conditions (e.g., link/node congestion state). Advantageously, the reactive routing sub-domains of the disclosure may restrict flooding scope within the network as a whole by, for example, establishing a search-domain for each node within the reactive routing sub-domain that comprises a limited number of surrounding nodes that may receive a RREQ from that particular node. In the event that a node within a reactive routing sub-domain (e.g., an originating node) initiates a RREQ within its search-domain and is unable to identify a path to a desired target node, the originating node may then attempt to identify the target node with the aide of a transit node. For example, unicast or loose source routing may be used to reach out-of-domain (or out-of-search-domain) target destinations via dynamically discovered points of transit (e.g., transit nodes), with a resulting decrease in control plane cost overhead. Additionally, capable nodes within the reactive routing network may serve to establish search-domain boundaries within the network, which may be based on control plane cost overhead due to flooded messages (e.g., network state) within the reactive routing network prior to reactive routing network division into reactive routing sub-domains.

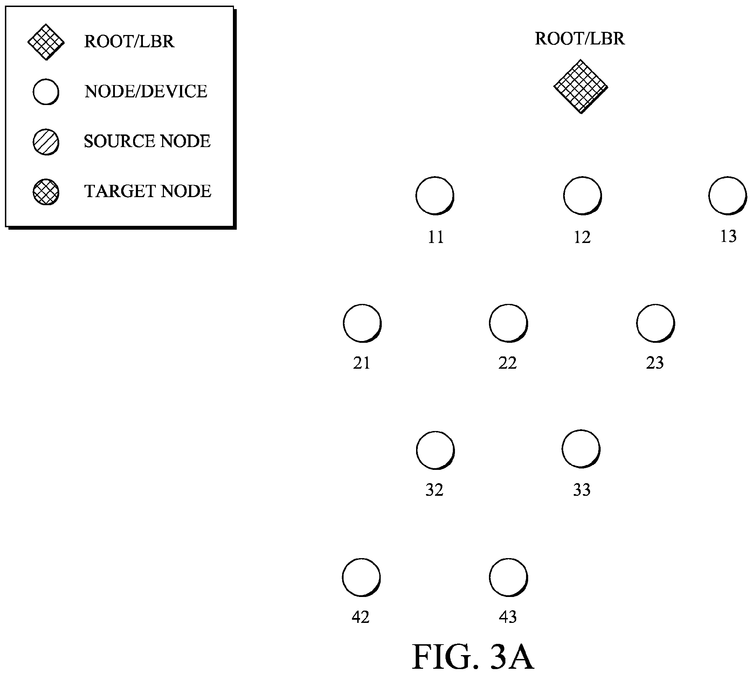

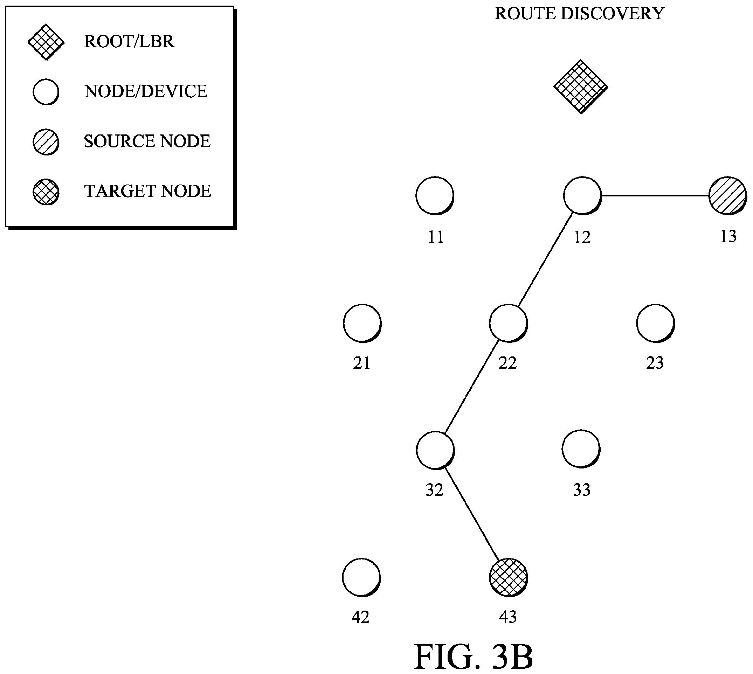

According to the techniques herein, route discovery in a reactive routing network may be facilitated by the use of transit nodes. For example, FIG. 3A depicts a reactive routing network comprising eleven nodes, including a Root/LBR. Consider the situation in which node 13 needs to find a route in the network to node 43. In a typical reactive routing network, node 13 will broadcast a probe/message (e.g., a RREQ) in order to discover a route to node 43. Given this scenario, there are multiple approaches that may be taken for such route discovery:
1) Node 43 may return all of the received messages/probes to node 13 with the recorded path (e.g., a route reply or "RREP"), and path selection may be performed by node 13 on the basis of the path cost, as indicated by the received messages/probes;
2) Node 43 may arm a timer upon receiving the first message/probe from node 13, and once the timer has expired, node 43 may select the received message/probe with the "best" path according to the path cost; and/or
3) Node 43 may immediately return the first received message/probe to node 13 in order to avoid wasting time before sending the data packet, and may store the path cost for that particular message/probe and only return further messages/probes if their path cost is better then the path cost for the original message/probe by a particular value "X" (e.g., by X%).
Illustratively, once a route is discovered between node 13 (e.g., source/requestor) and node 43 (e.g., destination), for example 13-12-22-32-43 as shown in FIG. 3B, the source may arm a timer T1, which establishes the period of time the route may be maintained. In another embodiment, the timer T1 may also be armed by intermediate nodes when a hop-by-hop routing protocol is used. After the expiration of timer T1, the route may be flushed and the route discovery process may occur again the next time a new path to node 43 is needed. It will be appreciated by the skilled artisan that increasing the value of T1 may minimize the undesirable effect of flooding messages/probes at the risk of increasing the amount of states in the nodes (e.g., number of stored routed), but more importantly may increase the probability of using a stale route.

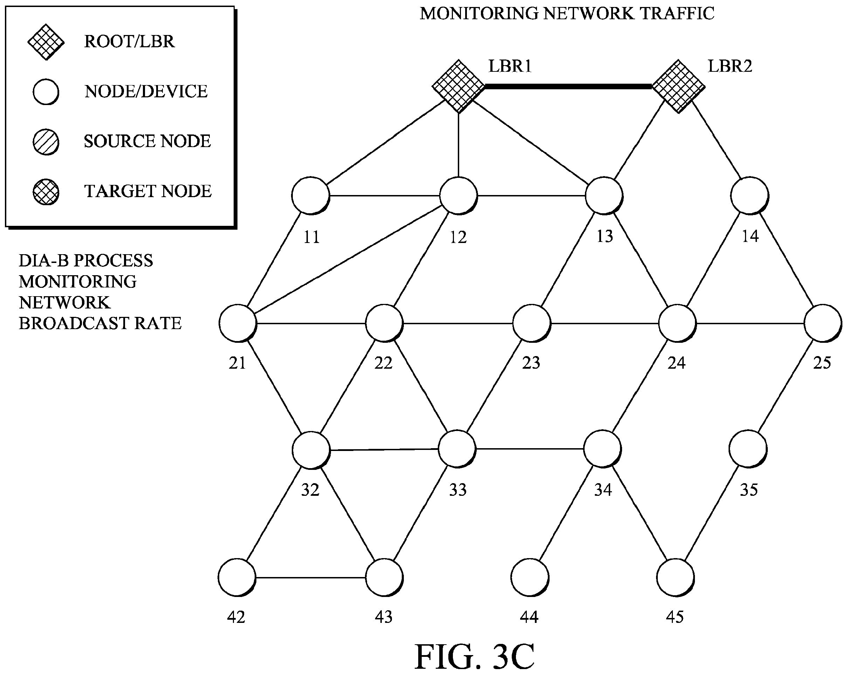

Operationally, the techniques herein may provide a software module referred to as a Distributed Intelligent Agent-Broadcast (DIA-B), which may be hosted by a capable node/device (e.g., the LBR) within the reactive routing network or on a separate device, such as a network management server (NMS) or other management device. For example, the DIA-B may be encompassed by routing process 244 (see, e.g., FIG. 2). As shown in FIG. 3C (depicting a simplified view of an expanded network), the DIA-B may monitor the amount of control-plane traffic occurring in the network. In particular, the DIA-B may monitor the amount/volume of discovery messages/probes that are being flooded in the network. It is important to note that in the situation where the scope of particular messages/probes broadcast within the network is limited, such messages/probes may not reach the DIA-B. Consequently, the level of control plane traffic observed by the DIA-B may establish a lower bound for a particular network region when the discovery messages/probes are limited in scope. However, discovery messages/probes that are not limited in scope incur much more cost, and the DIA-B may monitor these messages/probes. Furthermore, the DIA-B may monitor the current state of the network by collecting information about a variety of network parameters such as, for example, traffic load, congestion, and the like, from various nodes within the network to either the LBR or a NMS. It is contemplated within the scope of the disclosure that link usage/congestion areas may be locally available at the LBR/DIA-B or may be obtained from the NMS/CIC (e.g., a central intelligence controller).

In addition, the techniques herein provide that all DIA-B processes, or other capable nodes/devices, may announce themselves as potential transit nodes. For example, DIA-B processes may self-identify as potential transit nodes via an IPv6 broadcast message(s), or via a routing protocol that may advertise their node capability such as, for example, a routing metric specified in IETF Internet Draft, entitled "Routing Metrics used for Path Calculation in Low Power and Lossy Networks" <draft-ietf-roll-routing-metrics-19> by Vasseur, et al. (March 1, 2011 version) for the RPL protocol, or IS-IS node capability extensions in the event that ISIS may be used by the LBR on the core network backbone.

Operationally, the techniques herein provide a control plane overhead threshold value that may determine when routing region division should occur within the reactive routing network. For example, if the DIA-B process determines that the control plane overhead due to flooded messages/probes (e.g., RREQs) does not exceed the pre-defined threshold value, or that there are no congested areas in the network that would benefit from a reduction of the number of flooded messages/probes, then the DIA-B process may determine that no action is required with respect to routing region division. However, if the DIA-B process determines that the control plane overhead due to flooded messages/probes does exceed the pre-defined threshold value, then the DIA-B process may trigger dynamic division of the reactive routing network into one or more routing sub-domains via the following exemplary set of actions.

A capable node/device (e.g., an LBR, a NMS, a transit node, etc.) may perform a scoped flood of a new message, referred to herein as the Segmentation Message (e.g., an IPv6 message), for all destinations within a specific distance such that all nodes receiving the Segmentation Message comprise a reactive routing sub-domain. The Segmentation Message may cause nodes receiving the message to bound the scope of any subsequent route discovery messages (e.g., RREQs) flooded by such receiving nodes, e.g., by setting the TTL value of the flooded route discovery messages to specified path length "PL(i)", as described below, which may create search-domains for each node within the reactive routing sub-domain. In this manner, the Segmentation Message may create a threshold at which the receiving node (e.g., a source node) may transition from a flooding protocol to a transit node transmission protocol when discovering routes within the network. For example, the Segmentation Message may establish a threshold level at which a source node may transition from a protocol of flooding a RREQ within the bounded scope of surrounding nodes/devices set by the Segmentation Message (i.e., a search-domain), to a protocol of transmitting messages directly to a transit node (e.g., the transit node that originated the Segmentation Message, or another transit node), which may then continue the search to complete the route request (if the transit node is not already aware of the intended target node of the route request).

Illustratively, direct transmission from the source node to the transit node may occur by unicasting or by "loose-hop" routing with the transit node set as the first next loose hop. In other words, a capable node may transmit a Segmentation Message to a subset of nodes/devices within a reactive routing network via a scoped flood (e.g., a sub-domain), and the Segmentation Message may then direct the subset of nodes/devices (i.e., the routing sub-domain) to use flooding to identify any target node ≤ "X" hops away (e.g., PL(i)), which creates a search-domain, and if no RREP is received within "N" attempts, to then transmit that corresponding RREQ directly to a transit node via unicast or loose hop routing so that the transit node may continue the search for the target node.

Note that in one embodiment, the Segmentation Message may be unicast to any capable node (e.g., a LBR, a transit node, a NMS, etc.), which may then flood the Segmentation Message with a time-to-live (TTL) indicator (i.e., a scoped flood of the Segmentation Message). Advantageously, this approach may allow the capable node (e.g., the LBR/root or transit node) to divide the network into one or more routing sub-domains by delivering the Segmentation Message to a localized region of the network. In another embodiment, the Segmentation Message may be broadcast to all nodes in the network (e.g., from a central network management device), and may affect how all nodes in the network operate. In still another embodiment, the Segmentation Message may be unicast to individual nodes within the reactive routing network. It is contemplated within the scope of the disclosure that a routing sub-domain may, or may not, contain a transit node.

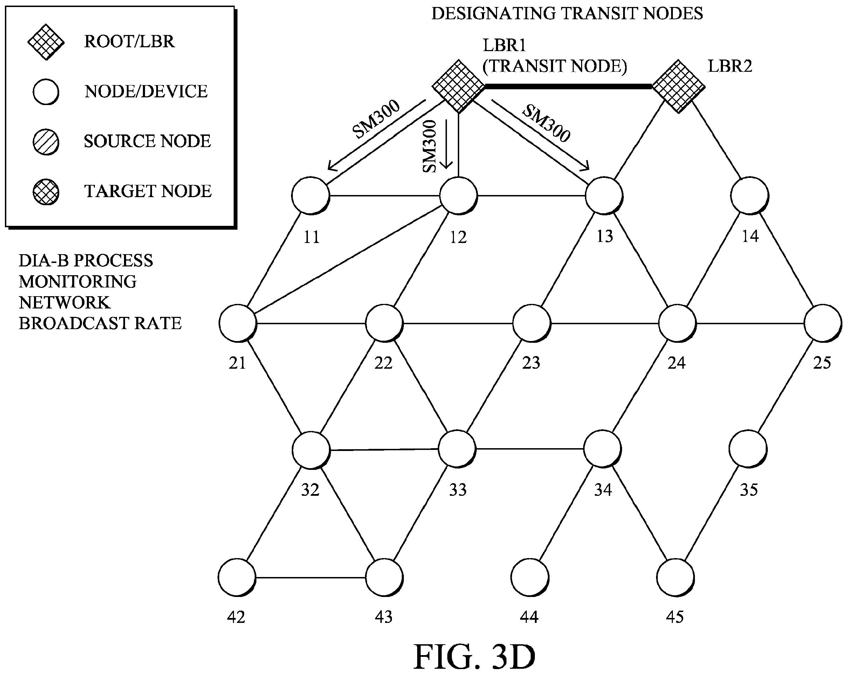

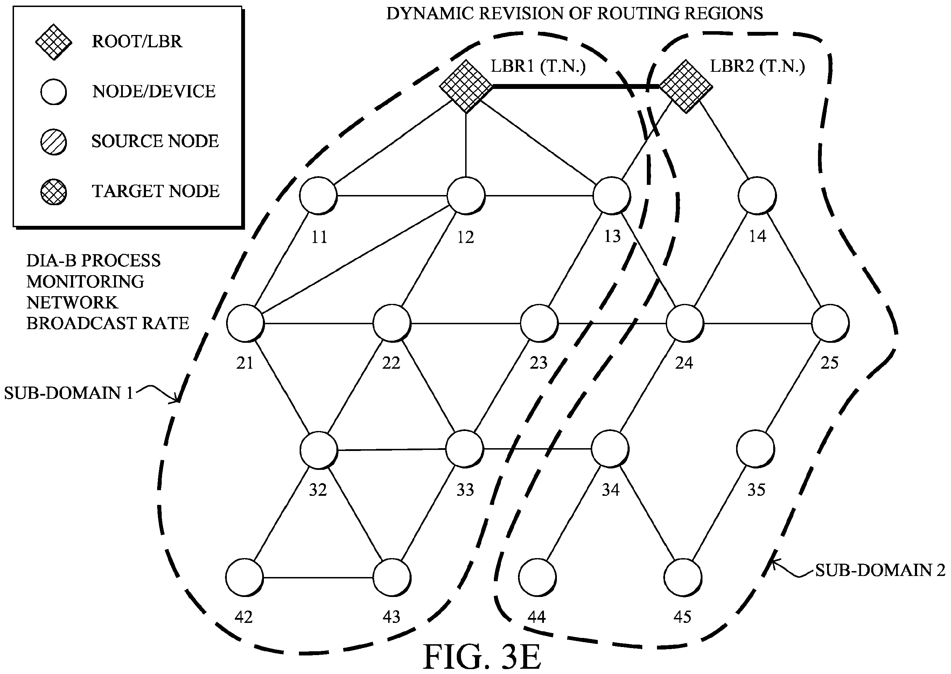

Illustratively, FIG. 3C depicts an expanded network in which the DIA-B may monitor the message/probe broadcast rate within the expanded network. If the DIA-B process determines that the level of flooding within the expanded network is too high, or that particular links within the expanded network (e.g., 13-LBR2 or 23-24) are congested, the DIA-B process may dynamically signal one or more nodes (e.g., the Root/LBR) to advertise itself/themselves as a "transit node(s)." For example, as shown in FIG. 3D, LBR1 may self-identify as a transit node and begin broadcasting segmentation message (SM) 300, which may cause dynamic division of the routing region of the expanded network into two or more routing sub-domains, as shown in FIG. 3E.

Upon receiving the SM 300, each node within the network may begin bounding the scope of any flooded message/probe (RREQ) by setting the TTL value of the packet to PL(i), effectively creating search-domains within the routing sub-domain. For example, if PL=3, then node 21 in the expanded network would not be able to find a direct route to node 25 using RREQ messages because it exceeds the hop threshold. Instead, a route from node 21 to note 25 may be established using the mechanism described below.

If a destination node cannot be reached within the source node's search-domain (e.g., no RREP packet has been received after "N" trials, where N≥1), then the source node may begin to use loose routing, with LBR1 set as the first next loose hop, essentially, to let the transit node complete the unknown path to the destination/target node. If the route to the LBR1 is known, then the source node may source route the packet with the last two entries listed as loose hops. For example, if the packet received by node 42 seeks a path to node 25, the packet may carry the following source route: 42-32-22-12-LBR1(L)-25(L) (where "(L)" indicates the ends of a loose hop). If the source node does not know the source route to the closest transit node, it may either send a message/probe to discover a path to the node or, if available, it may use a simple proactive DAG to provide hop-by-hop upward routing to the LBR of interest. Upon receiving such a loose route message/probe, LBR1 may then add the next hop entry (e.g., LBR2) in any of a variety of ways. For example, LBR1 may multicast the RREQ to other transit nodes within the reactive routing network to determine whether any may be able to complete the route to the target node. If none of the queried transit nodes are able to complete the route (e.g., if the target node is not located within a transit node associated network sub-domain), LBR1 may then flood the RREQ to the entire network to identify a route to the target node.

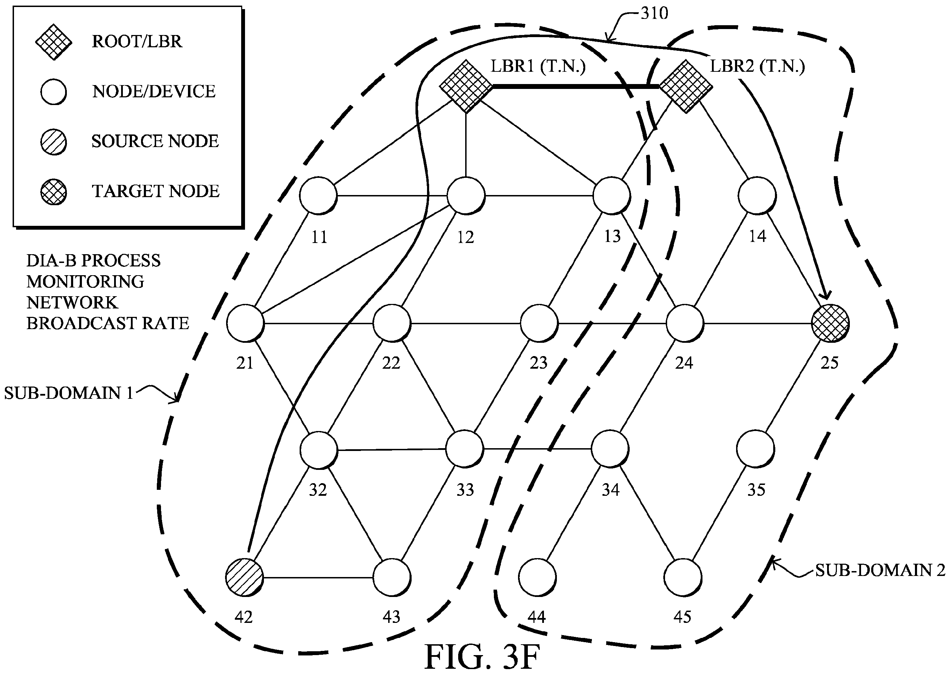

In the event that the target node is located within the LBR2 network sub-domain, and LBR2 knows the path to the target node, then LBR2 may return the completed route to LBR1. However, if LBR2 does not know the route to the target node, it may then initiate a local message/probe broadcast with the destination target node desired by the source node with, for example, a TTL value of PL(2) (i.e., the value of the Path Length in its own search-domain). Upon receiving the reply (e.g., a RREP) from the destination node, the discovered path may be added to the RREP messages and sent back to the requesting LBR, which may, in turn, return the RREP to the source node with the fully discovered path 310, for example, 42-32-22-12-LBR1-LBR2-14-25, as shown in FIG. 3F.

In addition, the LBRs may keep track of the number of identified loose routes so as to dynamically adjust the values of PL(i). Larger values of PL(i) may lead to wider search-domains and more optimal paths at the cost of increased broadcast domains.

Notably, the value of PL(i) may have a number of consequences, and may be chosen by the initiating LBR according to the presence of other LBRs to make sure that PL(i) (i being the search-domain) may be chosen so as to guarantee existence of a path between each pair of nodes in the network. For example, as described above, if LBR2 sets the TTL value as PL(1)=4, then node 42 would not be able to establish a route to node 14. In order to compensate for this scenario, LBR2 may set the value of PL(2) high enough to guarantee that a path will be found.

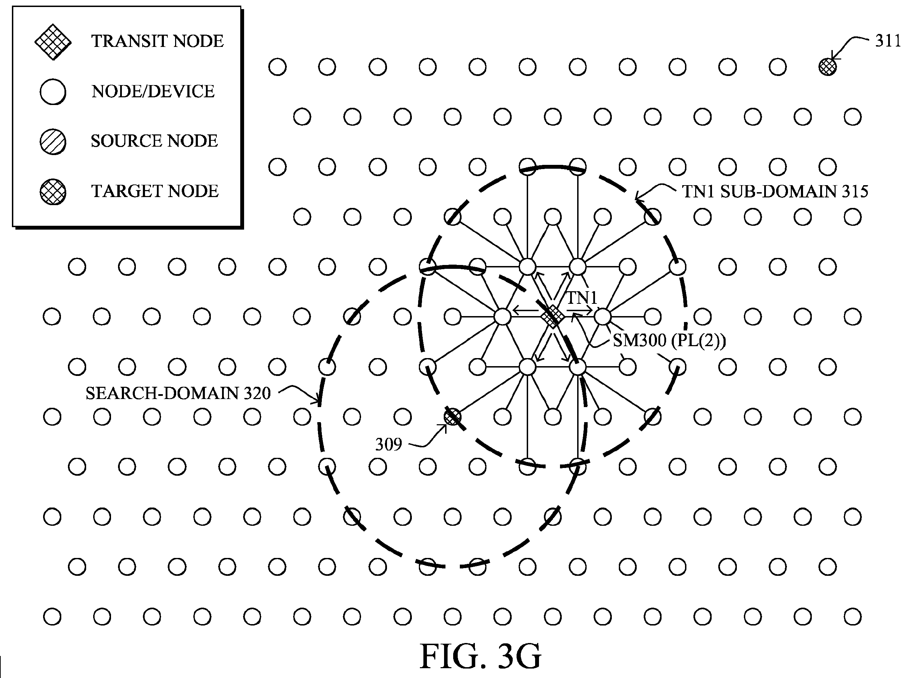

In view of the foregoing, one of skill in the art will appreciate that FIGS. 3C-3F represent simplified views of an exemplary extended network. For example, FIG. 3G depicts dynamic division of a reactive routing network into routing sub-domains in a more complex reactive routing network. As described above, a node within the reactive routing network may self-identify as a transit node (e.g., TN1)-upon its own determination or upon instruction from a management device-and broadcast an SM 300 with a PL(1) value of, for example, PL(1)=2. The broadcast of SM 300 with a TTL of 2 may establish TN1 routing sub-domain 315, as shown in FIG. 3G, in which each node may have a bounded RREQ scope of PL(1)=2. Accordingly, each node within TN1 routing sub-domain 315 may have its own bounded RREQ scope search-domain 320, as shown in FIG. 3G (for illustrative purposes, only one such search-domain is depicted for a specific node-shown as source node 309). Said differently, each node within a range of the SM 300 (e.g., two hops away from the transit node) may each have their own search boundary that is PL(1) away (e.g., two hops away from the particular node). As described above, if source node 309 initiates a local-scoped flood of a RREQ for target node 311 within bounded scope search-domain 320, and no RREP is received within "N" attempts, then source node 309 may unicast the RREQ directly to TN1 (or it may switch to loose routing with TN1 set as the first next loose hop).

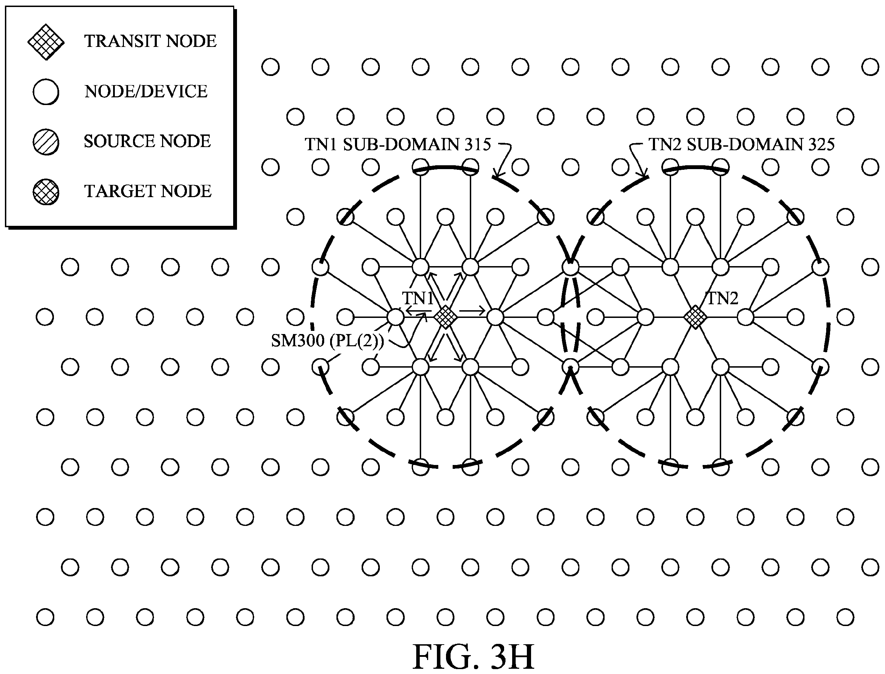

It is contemplated within the scope of the disclosure that reactive routing network sub-domains may, or may not, overlap. As shown in FIG. 3H, TN2 may identify as a transit node and broadcast a SM 300 with PL(2)(not shown) to generate TN2 routing sub-domain 325, which may be (though need not be) approximately the same size as, and overlap with, TN1 routing sub-domain 315. Such overlapping sub-domains do not create an issue for the techniques herein because of the overlapping nature of the bounded RREQ scope search-domains for each node within TN1 routing sub-domain 315 and/or TN2 routing sub-domain 320. In other words, due to their bounded RREQ scope search-domains and geo-spatial location within the reactive routing network, some nodes within TN1 routing sub-domain 315 may be able to directly query some nodes in TN2 routing sub-domain 320, but not others. For the latter nodes, the RREQ may transit via TN1 to reach the desired target node in TN2 routing sub-domain 320 by any of the methods described above. Note that should a node receive two segmentation messages, that node may simply select one of the corresponding transit nodes, or may load-balance between the two.

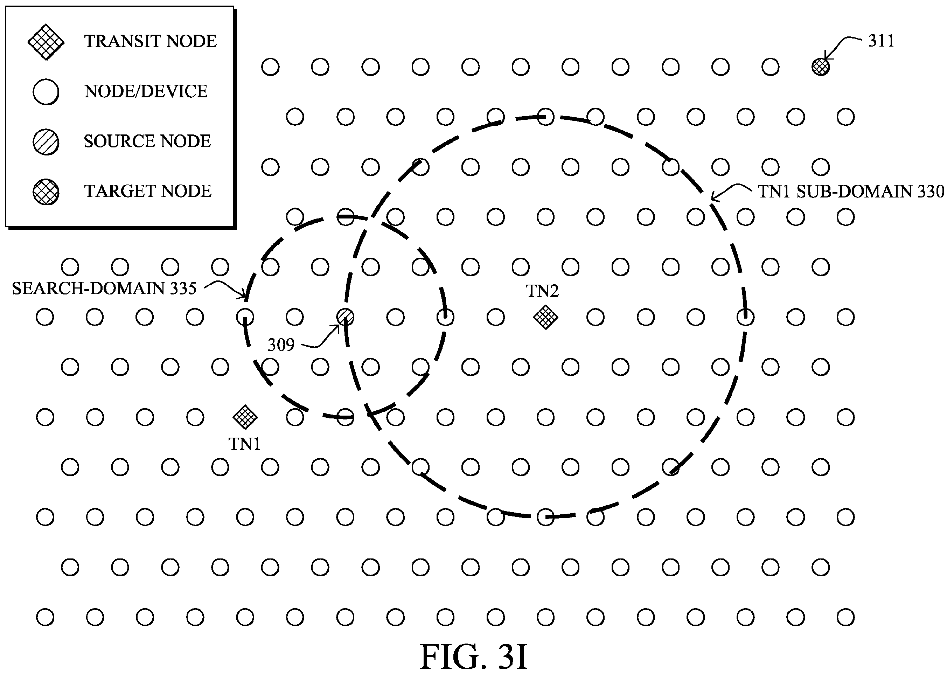

In addition, as described above, the techniques herein provide that a source node within a particular routing sub-domain may route a RREQ to one or more different transit node(s). For example, FIG. 3I depicts a reactive routing network in which TN1 has initiated a scoped broadcast of a Segmentation Message that establishes TN1 routing sub-domain 330. However, the Segmentation Message may establish bounded search scope search-domains for nodes within TN1 routing sub-domain 330 that may be completely different from the scope of its own initial broadcast (i.e., the routing sub-domain). In this context, a source node within TN1 routing sub-domain 330 may be positioned within the network such that a different transit node (e.g., TN2) is closer to the source node than TN1. In this case, if source node 309 initiates a local-scoped flood of a RREQ for target node 311 within bounded scope search-domain 335, and no RREP is received within "N" attempts, then source node 309 may unicast the RREQ directly to TN2 instead of TN1. In one embodiment, the source node 309 may keep track of the "closest" transit node by any of a variety of distance metrics (e.g., hop count, reliability, latency, etc.). In one embodiment, this distance metric may be obtained from the Segmentation Message. In another embodiment, the node may flood a RREQ to discover one or more transit nodes. Although such a transit node discovery method would initiate a network flood, the flood only occurs to the extent necessary to find suitable transit nodes, to which unicast RREQs may then be sent to discover routes to other target devices.

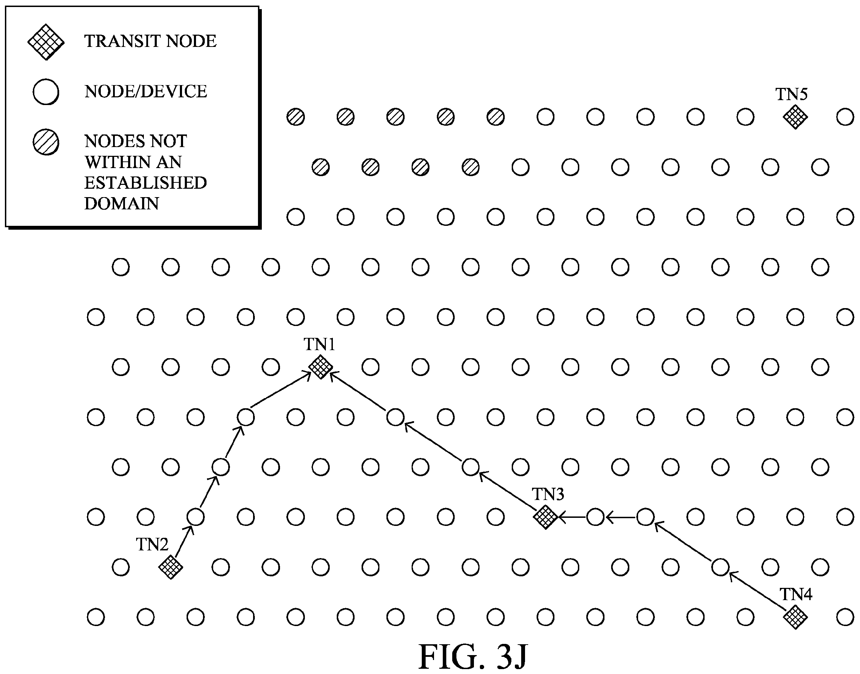

In addition, the techniques herein also provide that TN1 may directly query specific "linked" transit nodes within the dynamically divided reactive routing network in order to complete route discovery. For example, as shown in FIG. 3J, TN1 may maintain proactive DAGs to specific "linked" transit nodes within the network such as, for example, TN2, TN3, and TN4. In order to query "non-linked" transit nodes such as, for example, TN5, or nodes that are not resident within a transit node-associated network sub-domain (e.g., slant hashed nodes in FIG. 3J), TN1 may flood the RREQ of the originating node to the entire network.

The techniques herein provide a significant increase in efficiency and decrease in control plane overhead because the bounded RREQ scope search-domains and the ability of transit nodes to efficiently complete route discover may significantly decrease overall network traffic. In addition, even if it is necessary for a particular transit node (e.g., LBR1/TN1) to initiate a network flood to identify a route to a target node, the techniques herein may allow that discovered route to remain available for other nodes within the LBR1 sub-domain looking to reach the same target node, which may prevent additional network floods.

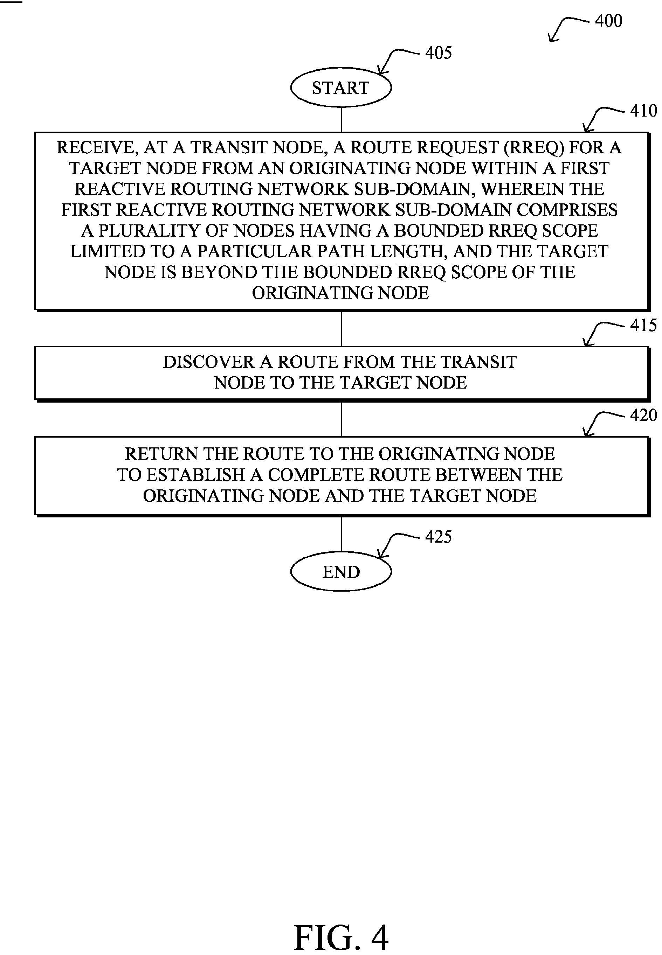

FIG. 4 illustrates an example simplified procedure 400 for dynamic division of a reactive routing network into reactive routing sub-domains in accordance with one or more embodiments described herein, particularly from the perspective of a transit node. The procedure 400 may start at step 405, and continue to step 410 where, as described above, a transit node in a first reactive routing network sub-domain may receive a RREQ from an originating node within the first reactive routing network sub-domain for a target node determined by the originating node to be beyond the bounded RREQ scope search-domain of the originating node. As shown in step 415, the transit node may then discover a route from the transit node to the target node. As shown in step 420, the transit node may then return the route to the originating node. In this manner, the transit node may establish a complete route between the originating node and the target node, and then the procedure 400 may illustratively end at step 425. In other words, the transit node may act as an intermediary between the first reactive routing network sub-domain and target nodes within other reactive routing network sub-domains, which dramatically decreases the control overhead required to discover and establish complete paths between an originating node and a target node within a reactive routing network.

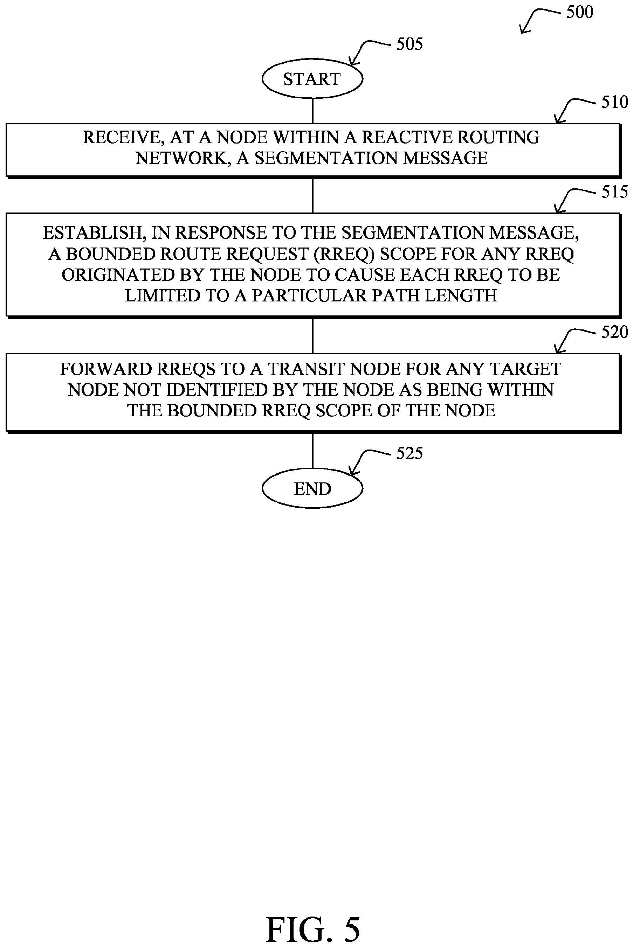

Similarly, FIG. 5 illustrates an example simplified procedure 500 for dynamic division of a reactive routing network into reactive routing sub-domains in accordance with one or more embodiments described herein, particularly from the perspective of a requesting node. The procedure 500 may start at step 505, and continue to step 510 where, as described above, a node within a reactive routing network may receive a segmentation message from an originating capable node (e.g., a transit node, a LBR, etc.). As shown in step 515, the segmentation message may function to establish a bounded RREQ scope for any RREQ originated by the node that is limited to a particular path length, effectively establishing a search-domain centered around the node. As shown in step 520, when the node originates a RREQ within the predetermined bounded scope of the search-domain and fails to identify the desired target node, the node may then forward the RREQ to a receiving transit node, and then the procedure 500 may illustratively end at step 525. In this manner, the originating node initiates an efficient bounded scope search for the target within the search-domain, and if this search is unsuccessful the originating node forwards the RREQ to a receiving transit node, which may or may not be within the first reactive routing network sub-domain, to act as an intermediary to complete the route request. Accordingly, the techniques herein may dramatically decreases the control overhead required to discover and establish complete paths between and originating node and a target node.

It should be noted that while certain steps within procedures 400 and 500 may be optional as described above, the steps shown in FIGS. 4 and 5 are merely examples for illustration, and certain other steps may be included or excluded as desired. Further, while a particular order of the steps is shown, this ordering is merely illustrative, and any suitable arrangement of the steps may be utilized without departing from the scope of the embodiments herein. Moreover, while procedures 400-500 are described separately, certain steps from each procedure may be incorporated into each other procedure, and the procedures are not meant to be mutually exclusive.

The techniques described herein, therefore, provide for dynamic division of reactive routing networks into reactive routing sub-domains in order to control/minimize flooding, which provides increased scalability for reactive routing networks. By using the transit nodes as a bridge to help reach the final destination node, the techniques herein may reduce congestion in reactive routing networks. In particular, the techniques herein increase scalability both for an increase in the number of nodes in a network, and for small networks as the number of active P2P flows in the network increases.

While there have been shown and described illustrative embodiments of techniques for use with reactive routing in communication networks, it is to be understood that various other adaptations and modifications may be made within the embodiments herein. For example, the embodiments have been shown and described herein with relation to LLNs. However, the embodiments in their broader sense are not as limited, and may, in fact, be used with other types of networks, regardless of whether they are considered constrained. In addition, while certain protocols are shown, other suitable protocols may be used, accordingly.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/RAM/EEPROM/etc.) having program instructions executing on a computer, hardware, firmware, or a combination thereof. Accordingly this description is to be taken only by way of example and not to otherwise limit the scope of the embodiments herein,

## Claims

1. A method, comprising:
receiving, at a node (309) within a reactive routing network, a segmentation message (300);
establishing, in response to the segmentation message, a bounded route request, RREQ, flooding scope (320) for any flooded RREQ originated by the node to cause each flooded RREQ to be limited to a particular path length;
tracking a closest transit node (TN1) of a plurality of transit nodes (TN1, TN2) based on a distance metric;
attempting to identify a route to a target node (311) by flooding a RREQ within the bounded RREQ scope;
in response to failure to identify a route to the target node, unicasting at least one RREQ to the closest transit node (TN1) ; and
receiving a route to the target node from the transit node and using the received route to establish a complete route between the node and the target node.

2. The method as in claim 1, wherein the segmentation message comprises a time-to-live indicator to be used in RREQs broadcast by a plurality of nodes within a first reactive routing network sub-domain, or wherein the segmentation message comprises a time-to-live indicator which limits the plurality of nodes contacted by the segmentation message and define a boundary for a first reactive routing network sub-domain.

3. The method as in claim 1, further comprising:
triggering broadcast of the segmentation message in response to control plane overhead of the reactive routing network exceeding a predetermined threshold value.

4. The method as in claim 1, wherein the RREQ for the target node comprises the transit node as a first loose hop and the target node as a final loose hop.

5. The method as in claim 1, wherein the segmentation message is broadcast in response to an instruction from a management device.

6. The method as in claim 1, wherein the segmentation message is received from the transit node.

7. The method as in claim 1, wherein the node, having determined that the target node is not within the bounded RREQ scope, uses a proactive directed acyclic graph, DAG, to provide a route to the transit node, or broadcasts a RREQ to identify a route to the transit node.

8. The method as in claim 1, further comprising:
receiving a route reply, RREP, from the transit node, the RREP indicating an entire path from the originating node to the target node via the transit node.

9. The method as in claim 1, further comprising:
receiving segmentation messages from two or more transit nodes; and picking one particular transit node to receive forwarded RREQs.

10. An apparatus, comprising:
one or more network interfaces to communicate within a computer network;
a processor coupled to the network interfaces and adapted to execute one or more processes; and
a memory configured to store a process executable by the processor, the process when executed operable to perform the method according to any preceding claim.

## Patentansprüche

1. Verfahren, das Folgendes beinhaltet:
Empfangen einer Segmentierungsnachricht (300) an einem Knoten (309) in einem reaktiven Routing-Netzwerk;
Einrichten, als Reaktion auf die Segmentierungsnachricht, eines beschränkten RREQ-(Route Request)-Flutungsumfangs (320) für eine von dem Knoten ausgehende geflutete RREQ, um zu bewirken, dass jede geflutete RREQ auf eine bestimmte Pfadlänge begrenzt wird;
Verfolgen eines nächstliegenden Transitknotens (TN1) aus einer Mehrzahl von Transitknoten (TN1, TN2) auf der Basis einer Distanzmetrik;
Versuchen durch Fluten einer RREQ innerhalb des beschränkten RREQ-Umfangs, eine Route zu einem Zielknoten (311) zu identifizieren;
Unicasten, als Reaktion darauf, dass keine Route zum Zielknoten gefunden wird, wenigstens einer RREQ zum nächstliegenden Transitknoten (TN1); und
Empfangen einer Route zum Zielknoten vom Transitknoten und Benutzen der empfangenen Route zum Einrichten einer kompletten Route zwischen dem Knoten und dem Zielknoten.

2. Verfahren nach Anspruch 1, wobei die Segmentierungsnachricht einen Lebenszeitindikator umfasst, der in RREQs zu benutzen ist, die von einer Mehrzahl von Knoten innerhalb einer ersten reaktiven Routing-Netzwerk-Subdomäne gebroadcastet werden, oder wobei die Segmentierungsnachricht einen Lebenszeitindikator umfasst, der die Mehrzahl von von der Segmentierungsnachricht kontaktierten Knoten begrenzt und eine Grenze für eine erste reaktive Routing-Netzwerk-Subdomäne definiert.

3. Verfahren nach Anspruch 1, das ferner Folgendes beinhaltet:
Auslösen eines Broadcast der Segmentierungsnachricht als Reaktion darauf, dass Steuerebenen-Overhead des reaktiven Routing-Netzwerks einen vorbestimmten Schwellenwert übersteigt.

4. Verfahren nach Anspruch 1, wobei die RREQ für den Zielknoten den Transitknoten als ersten losen Sprung und den Zielknoten als letzten losen Sprung umfasst.

5. Verfahren nach Anspruch 1, wobei die Segmentierungsnachricht als Reaktion auf einen Befehl von einem Managementgerät gebroadcastet wird.

6. Verfahren nach Anspruch 1, wobei die Segmentierungsnachricht vom Transistknoten empfangen wird.

7. Verfahren nach Anspruch 1, wobei der Knoten nach dem Bestimmen, dass der Zielknoten nicht in den beschränkten RREQ-Umfang fällt, einen proaktiven gerichteten azyklischen Graph (DAG) zum Bereitstellen einer Route zum Transitknoten benutzt oder eine RREQ zum Identifizieren einer Route zum Transitknoten broadcastet.

8. Verfahren nach Anspruch 1, das ferner Folgendes beinhaltet:
Empfangen einer Routenantwort RREP vom Transitknoten, wobei die RREP einen gesamten Pfad vom Ursprungsknoten zum Zielknoten über den Transitknoten anzeigt.

9. Verfahren nach Anspruch 1, das ferner Folgendes beinhaltet:
Empfangen von Segmentierungsnachrichten von zwei oder mehr Transitknoten; und Auswählen eines bestimmten Transitknotens zum Empfangen von weitergeleiteten RREQs.

10. Vorrichtung, die Folgendes umfasst:
eine oder mehrere Netzwerkschnittstellen zum Kommunizieren in einem Computernetzwerk;
einen Prozessor, der mit den Netzwerkschnittstellen gekoppelt und zum Ausführen von einem oder mehreren Prozessen ausgelegt ist; und
einen Speicher, konfiguriert zum Speichern eines vom Prozessor ausführbaren Prozesses, wobei der Prozess bei Ausführung die Aufgabe hat, das Verfahren nach einem vorherigen Anspruch durchzuführen.

## Revendications

1. Procédé, comprenant :
la réception, au niveau d'un noeud (309) dans un réseau à routage réactif, d'un message de segmentation (300) ;
l'établissement, en réponse au message de segmentation, d'une étendue de dissémination de requête de route bornée, RREQ, (320) pour toute RREQ disséminée partant du noeud afin de limiter chaque RREQ disséminée à une longueur de chemin particulière ;
le suivi d'un noeud de transit le plus proche (TN1) d'une pluralité de noeuds de transit (TN1, TN2) selon une métrique de distance ;
la tentative d'identification d'une route jusqu'à un noeud cible (311) en disséminant une RREQ en-deçà de l'étendue de RREQ bornée ;
en réponse à l'impossibilité d'identifier une route jusqu'au noeud cible, l'unidiffusion d'au moins une RREQ jusqu'au noeud de transit le plus proche (TN1) ; et
la réception d'une route jusqu'au noeud cible depuis le noeud de transit et l'utilisation de la route reçue pour établir une route complète entre le noeud et le noeud cible.

2. Procédé selon la revendication 1, dans lequel le message de segmentation comprend un indicateur de durée de validité destiné à être utilisé dans la diffusion des RREQ par une pluralité de noeuds dans un premier sous-domaine de réseau à routage réactif, ou dans lequel le message de segmentation comprend un indicateur de durée de validité qui limite la pluralité de noeuds contactés par le message de segmentation et définit une frontière d'un premier sous-domaine de réseau à routage réactif.

3. Procédé selon la revendication 1, comprenant en outre :
le déclenchement d'une diffusion du message de segmentation quand un surdébit de plan de commande du réseau à routage réactif dépasse une valeur seuil prédéterminée.

4. Procédé selon la revendication 1, dans lequel la RREQ du noeud cible comprend le noeud de transit comme premier saut lâche et le noeud cible comme dernier saut lâche.

5. Procédé selon la revendication 1, dans lequel le message de segmentation est diffusé en réponse à une instruction émise par un dispositif de gestion.

6. Procédé selon la revendication 1, dans lequel le message de segmentation est reçu depuis le noeud de transit.

7. Procédé selon la revendication 1, dans lequel le noeud, ayant déterminé que le noeud cible n'est pas compris dans l'étendue de RREQ bornée, utilise un graphe cyclique dirigé, DAG, proactif, pour fournir une route au noeud de transit, ou diffuse une RREQ pour identifier une route jusqu'au noeud de transit.

8. Procédé selon la revendication 1, comprenant en outre :
la réception d'une réponse de route, RREP, depuis le noeud de transit, la RREP indiquant un chemin complet depuis le noeud de départ jusqu'au noeud cible en passant par le noeud de transit.

9. Procédé selon la revendication 1, comprenant en outre :
la réception de messages de segmentation depuis deux ou plusieurs noeuds de transit ; et la sélection d'un noeud de transit particulier pour recevoir les RREQ acheminées.

10. Appareil, comprenant :
une ou plusieurs interfaces réseau pour la communication au sein d'un réseau informatique ;
un processeur couplé aux interfaces réseau et adapté pour exécuter un ou plusieurs processus ; et
une mémoire configurée pour mémoriser un processus exécutable par le processeur, le processus, à son exécution, servant à mettre en oeuvre le procédé selon l'une quelconque des revendications précédentes.
